# FASCICULE DE BREVET EUROPEEN

(11) **EP 3 124 326 B1**
(45) Date de publication et mention de la délivrance du brevet: **12.06.2019**
(21) Numéro de dépôt: 16181764.8
(22) Date de dépôt: 28.07.2016
(51) Int. Cl.: B60Q 1/00

(54) **DISPOSITIF POUR FERMER UNE OUVERTURE DE BOÎTIER OPTIQUE DE VÉHICULE, BOÎTIER OPTIQUE ÉQUIPÉ D'UN TEL DISPOSITIF ET CORDON POUR LEDIT DISPOSITIF**
VORRICHTUNG ZUM SCHLIESSEN EINER ÖFFNUNG EINES OPTISCHEN GEHÄUSES EINES KRAFTFAHRZEUGS, MIT EINER SOLCHEN VORRICHTUNG AUSGESTATTETES OPTISCHES GEHÄUSE UND BAND FÜR DIESE VORRICHTUNG
DEVICE FOR CLOSING AN OPENING OF AN OPTICAL UNIT OF A VEHICLE, OPTICAL UNIT PROVIDED WITH SUCH A DEVICE AND CORD FOR SAID DEVICE

(30) Priorité: 31.07.2015 FR 1557429
(43) Date de publication de la demande: 01.02.2017
(73) Titulaire: VALEO ILUMINACION, 23600 Martos (ES)
(72) Inventeur: FERNANDEZ, Ricardo, 23600 Martos (ES); MORENO, Juan-Francisco, 29620 Torremolinos (ES); RUBIA MENA, Juan-Antonio, 23600 Martos (ES); CABANNE, Damien, 23600 Martos (ES); PASTOR, Ramon, 23600 Martos (ES); RUIZ, Francisco, 23600 Martos (ES); MADORRAN TIL, Gonzalo, 23600 Martos (ES)

(56) Documents cités:
- DE-A1-102008 032 278
- FR-A1- 2 611 252
- FR-A1- 2 711 213
- FR-A1- 2 817 517
- FR-A1- 2 916 173
- JP-A- H09 298 001
- JP-A- 2001 236 805

## Description

L'invention se situe dans le domaine des équipements pour l'automobile, plus précisément dans le domaine des dispositifs d'éclairage.

Les boitiers optiques des véhicules comportent de façon connue une source lumineuse et différents éléments pour projeter la lumière à l'extérieur du boitier. Ces boitiers comportent en outre fréquemment une ouverture et un capuchon prévu pour se fixer sur cette ouverture, par exemple pour accéder à l'intérieur du boitier. Un premier problème posé par ces capuchons est qu'une fois désolidarisé du boitier, il est facile de les égarer ou de les perdre, occasionnant une perte de temps pour l'opérateur.

Un autre problème provient du fait que dans certaines circonstances, il est important que le capuchon soit manipulé par une personne compétente de façon qu'il soit parfaitement remis en place une fois qu'il a été enlevé, par exemple pour éviter les entrées d'eau dans le boitier. On souhaite donc éviter que le capuchon soit enlevé par exemple par l'utilisateur du véhicule, ou à tout le moins pouvoir vérifier que cela a été le cas en cas de problème.

Du document DE 10 2008 032278 on connaît un capuchon pour fermer une ouverture de boitier optique de véhicule, le capuchon fermant l'ouverture grâce à un mouvement de rotation et libérant l'ouverture grâce à un mouvement de rotation dans l'autre sens. Le bord du capuchon comporte des lamelles qui s'engrainent dans des dents solidaires du boitier dans le mouvement de fermeture du capuchon mais qui cassent ou se déforment de façon irréversible dans le mouvement inverse.

Le document FR2711213 décrit un dispositif pour fermer une ouverture de boitier optique selon le préambule de la revendication 1.

Ces documents ne décrivent pas de moyen pour éviter d'égarer ou de perdre un tel capuchon.

L'invention propose un dispositif pour fermer une ouverture de boitier optique de véhicule, le dispositif comportant un capuchon, ledit capuchon étant configuré pour fermer l'ouverture grâce à un mouvement réversible, caractérisé en ce qu'il comporte en outre un moyen de liaison souple ou articulé fixé au capuchon et prévu pour être fixé au boitier, de sorte que, après ouverture, ledit capuchon reste assujetti au boitier par ledit moyen de liaison.

Le moyen de liaison souple ou articulé, quand il est fixé au capuchon et au boitier, solidarise ces deux éléments de façon souple. Ainsi le capuchon reste en permanence relié au boitier optique et ne peut plus être perdu. L'optique peut être un projecteur avant de véhicule ou une optique arrière.

Le mouvement d'ouverture réversible peut être tout mouvement permettant d'assujettir le capuchon au boitier et/ou de le libérer, par exemple un mouvement de rotation, par exemple de type quart de tour.

Le moyen de liaison peut être une cordelette, une chaînette... mais avantageusement, le moyen de liaison peut comprendre un premier cordon souple.

Ledit cordon pourra comprendre deux extrémités. une première extrémité comportant des moyens de fixation au capuchon et une seconde extrémité comportant des moyens de fixation au boitier.

Le premier cordon est par exemple réalisé dans une matière plastique prévue pour résister à un environnement hostile. Il peut être plein ou creux, auquel cas il s'agit d'un tube, de section circulaire ou plate. Il peut être constitué d'une matière élastique ou non.

L'invention couvre tout moyen de fixation tel que vissage, rivetage, collage, clipsage... Les moyens de fixation aux extrémités du premier cordon peuvent consister en une ouverture traversante, par exemple pour un vissage, ou en une partie aplatie, par exemple pour un collage, ou autre.

Le moyen de liaison selon l'invention comprend en outre un moyen de détection d'une première ouverture du capuchon.

Comme indiqué plus haut, il peut être utile, en cas de problème sur une optique, de détecter que le boitier a été ouvert par une personne non autorisée. L'invention propose alors d'associer un moyen de détection de première ouverture du capuchon au moyen de liaison souple ou articulé.

Préférentiellement, selon les modes de réalisation de cet aspect de l'invention qui seront détaillés plus bas, la première extrémité du premier cordon est prévue pour être fixée au capuchon et la seconde extrémité est prévue pour être fixée au boitier.

Selon l'invention, le moyen de détection d'une première ouverture peut comprendre un second cordon souple comprenant deux extrémités, une première extrémité comportant des moyens de fixation soit au capuchon soit au boitier et une seconde extrémité reliée au premier cordon.

Ledit second cordon comprend une partie qui change d'aspect de façon irréversible sous l'effet d'une traction, de sorte que le mouvement du capuchon en vue de libérer l'ouverture provoque une traction sur ledit le second cordon et donc son changement d'aspect.

Selon cet aspect de l'invention, le moyen de détection de première ouverture comporte un second cordon associé au premier cordon. On entend par « associé au premier cordon » le fait que ce second cordon est relié par sa seconde extrémité au premier cordon. Le premier et le second cordon forment donc un ensemble unique, prenant la forme, comme il sera vu plus loin, soit d'un Y soit d'un cordon linéaire, de préférence constitué de la même matière. La première extrémité du second cordon comporte, comme le premier cordon, des moyens de fixation soit au boitier, soit au capuchon.

Le second cordon se distingue du premier en ce qu'il comporte une partie qui change d'aspect lorsque ce second cordon est soumis à une traction. Cette traction peut être provoquée par l'ouverture du capuchon. En effet, les capuchons de boitiers d'optique de véhicule s'ouvrent et se ferment généralement par un mouvement de rotation, en particulier un mouvement dit de « quart de tour », ce qui provoque un déplacement au moins de la bordure du capuchon.

Préférentiellement, le second cordon est relié par sa première extrémité au boitier (resp. au capuchon) et il est fixé par sa seconde extrémité, directement ou par l'intermédiaire du premier cordon, au capuchon (resp. au boitier). Le mouvement d'ouverture, par exemple de quart de tour, provoque une tension au moins dans le second cordon.

Dans la suite on appellera « assistant d'ouverture » l'ensemble formé par le premier et le second cordon.

Dans un premier mode de réalisation, la première extrémité du second cordon peut comporter des moyens de fixation au boitier et la seconde extrémité du second cordon peut être reliée à un point du premier cordon intermédiaire entre sa première et sa seconde extrémité.

Dans ce mode de réalisation, la seconde extrémité du second cordon est reliée au premier cordon et la première extrémité est, en utilisation, fixée au boitier. L'assistant d'ouverture prend donc la forme d'un Y.

Lorsque le capuchon subit un quart de tour pour son ouverture, le mouvement de rotation provoque une tension sur le premier cordon, qui est retransmise au second cordon, ce qui provoque son changement d'aspect.

Dans une variante de ce premier mode de réalisation, la première extrémité du second cordon peut comporter des moyens de fixation au capuchon et la seconde extrémité du second cordon peut être reliée à un point du premier cordon intermédiaire entre sa première et sa seconde extrémité.

L'assistant d'ouverture prend encore la forme d'un Y, mais la première extrémité du second cordon est, en utilisation, fixée au capuchon. Il fonctionne de la même façon que précédemment.

Dans un second mode de réalisation, la première extrémité du second cordon peut comporter des moyens de fixation au capuchon et la seconde extrémité du second cordon peut être reliée à la première extrémité du premier cordon.

Dans ce mode de réalisation, la première extrémité du second cordon est, en utilisation, reliée au capuchon et sa seconde extrémité est reliée à la première extrémité du premier cordon, toutes deux fixées au boitier. L'assistant d'ouverture prend donc une forme linéaire, le premier et le second cordon étant dans le prolongement l'un de l'autre.

Le mouvement de rotation du capuchon pour son ouverture provoque la mise en tension au moins du second cordon.

Dans une variante du second mode de réalisation, la première extrémité du second cordon peut comporter des moyens de fixation au boitier et la seconde extrémité du second cordon peut être reliée à la seconde extrémité du premier cordon.

L'assistant d'ouverture prend encore une forme linéaire, mais cette fois, en utilisation, la seconde extrémité du premier cordon et la seconde extrémité du second cordon sont fixées ensemble au capuchon, et la première extrémité du second cordon est fixée au boitier. Le mouvement de rotation du capuchon pour son ouverture provoque la mise en tension au moins du second cordon.

Avantageusement, la partie qui change d'aspect de façon irréversible peut être une partie frangible du second cordon ou une partie apte à changer de couleur.

Par exemple la partie qui change d'aspect peut être une partie rendue fragile du second cordon, qu'il soit élastique ou non, par exemple par une réduction de diamètre, un enlèvement de matière... Le second cordon peut aussi comporter une boucle fermée par un lien fragile qui se casse sous la tension, libérant la boucle.

Dans une autre variante, le cordon ne rompt pas sous la tension mais change localement de couleur.

Avantageusement, la partie du second cordon qui change d'aspect de façon irréversible peut être l'une des parties suivantes : la première extrémité, la seconde extrémité, une partie comprise entre la première extrémité et la seconde extrémité.

La partie qui change d'aspect peut se situer à tout emplacement du second cordon, notamment à l'une de ses extrémités. Dans le cas d'un assistant d'ouverture dont la première extrémité du second cordon est fragile par exemple (qu'il soit en forme de Y ou linéaire), cet assistant ce désolidarise alors en deux cordons distincts sous la tension.

Selon un exemple ne faisant pas partie de l'invention, le moyen de détection peut se situer sur le premier cordon. Les moyens de détection de première ouverture peuvent alors comporter des moyens qui changent d'aspect de façon irréversible sous l'effet d'une traction mais sans rompre, tel qu'un changement de couleur. Cet unique cordon remplit alors les deux fonctions : imperdabilité du capuchon et témoin d'ouverture.

Selon l'invention, les deux cordons sont distincts.

Avantageusement, le capuchon peut comporter des moyens de fixation aptes à coopérer avec les moyens de fixation du premier et/ou du second cordon pour obtenir la fixation d'une extrémité du ou des cordons sur le capuchon par simple pression.

Il est avantageux que l'assistant d'ouverture soit fixé rapidement par un personnel autorisé, soit à son montage initial, soit qu'il doive être remplacé après une ouverture non autorisée du capuchon. Le capuchon et l'assistant d'ouverture peuvent par exemple comprendre des parties mâles et femelles qui permettent d'obtenir cette fixation rapidement par simple pression. Avantageusement, ces parties mâles et femelles peuvent comporter des crans qui coopèrent pour rendre difficile l'arrachage de cet assistant d'ouverture, notamment par une personne non autorisée.

Avantageusement, les moyens de fixation du capuchon aptes à coopérer avec les moyens de fixation du premier ou du second cordon peuvent être situés à proximité de la périphérie du capuchon.

En disposant ces moyens à proximité de la périphérie du capuchon, on obtient que le mouvement d'ouverture, par exemple de rotation, du capuchon provoque un plus grand déplacement de ces moyens de fixation par rapport au boitier et donc une plus grande tension du ou des cordons, ce qui favorise son changement d'aspect.

L'invention porte aussi sur un boitier optique pour véhicule comportant une ouverture et un dispositif selon l'invention.

Avantageusement, ledit boitier peut comporter des moyens aptes à coopérer avec une extrémité du premier et/ou du second cordon pour obtenir la fixation d'une extrémité du ou des cordons sur le boitier par simple pression.

Comme pour le capuchon, le boitier peut comporter des parties mâles (resp. femelles) qui coopèrent avec des parties femelles (resp. mâles) de l'assistant d'ouverture, avantageusement crantées.

On propose également un exemple ne faisant pas partie de l'invention sous la forme d'un cordon souple en forme de Y, comportant un moyen de fixation à l'extrémité de chacune de ses branches, l'une des branches du Y comportant une partie apte à changer d'aspect de façon irréversible sous l'effet d'une traction.

L'assistant d'ouverture est alors un produit en soi, prévu pour coopérer avec le boitier et son couvercle. En effet, il est utile de disposer de ce produit pour une première monte et en cas de remplacement après une ouverture. Dans le cas d'espèce, l'assistant d'ouverture est en forme de Y.

Un autre exemple ne faisant pas partie de l'invention consiste en un cordon souple linéaire, comportant un premier moyen de fixation à sa première extrémité, un deuxième moyen de fixation à sa deuxième extrémité et un troisième moyen de fixation en un point intermédiaire entre sa première et sa deuxième extrémité, le cordon comportant une partie aptes à changer d'aspect de façon irréversible sous l'effet d'une traction.

Dans ce cas, l'assistant d'ouverture a une forme linéaire.

Des modes de réalisation et des variantes seront décrits ci-après, à titre d'exemples non limitatifs, avec référence aux dessins annexés dans lesquels :
Les figures 1A à 1D illustrent de façon schématique quatre modes de réalisation de l'invention,
La figure 2 détaille le mode de réalisation de la figure 1A et comporte une vue agrandie d'une portion du dispositif,
La figure 3 détaille le mode de réalisation de la figure 1D,
La figure 4 illustre en coupe transversale un mode de fixation d'un cordon sur un capuchon.

L'invention vise à fournir un dispositif pour fermer une ouverture de boîtier optique 400 de véhicule, en particulier de véhicule automobile. Ledit dispositif comprend un capuchon 300 et un moyen pour assujettir le capuchon 300 sur le boitier 400 de manière à le rendre imperdable. Selon une variante avantageuse, l'invention permet en outre de détecter une première ouverture du capuchon. A cet effet, elle propose un moyen de liaison entre le capuchon et le boitier prenant la forme d'un élément souple ou articulé qualifié dans la suite d'assistant d'ouverture.

Selon des modes de réalisation préférés, l'assistant d'ouverture comporte un premier 100 et un second cordons 200 reliés l'un à l'autre. Le premier cordon 100 a une première extrémité A et une seconde extrémité B. Le second cordon 200 a une première extrémité C et une seconde extrémité D. Le premier cordon 100 a pour fonction d'assujettir le capuchon 300 au boitier 400. Par convention, on considérera que le premier cordon est, en utilisation, fixé au capuchon par sa première extrémité A et au boitier par sa seconde extrémité B.

Le second cordon 200 est relié au premier cordon 100. Par convention, on considérera qu'il lui est relié par sa seconde extrémité D. Il y a trois façons de relier le second cordon au premier cordon :
- La seconde extrémité D est reliée au premier cordon 100 en un point intermédiaire entre ses deux extrémités A, B,
- La seconde extrémité D est reliée au premier cordon 100 par sa première extrémité A,
- La seconde extrémité D est reliée au premier cordon 100 par sa seconde extrémité B.

Le second cordon 200 a pour fonction de signaler une première ouverture du capuchon. Dans les modes de réalisation illustrés, cette première ouverture est signalée par le bris du second cordon. A cet effet il possède un point fragile 210 pouvant être situé à l'une de ses extrémités C, D ou en un point intermédiaire entre ses extrémités.

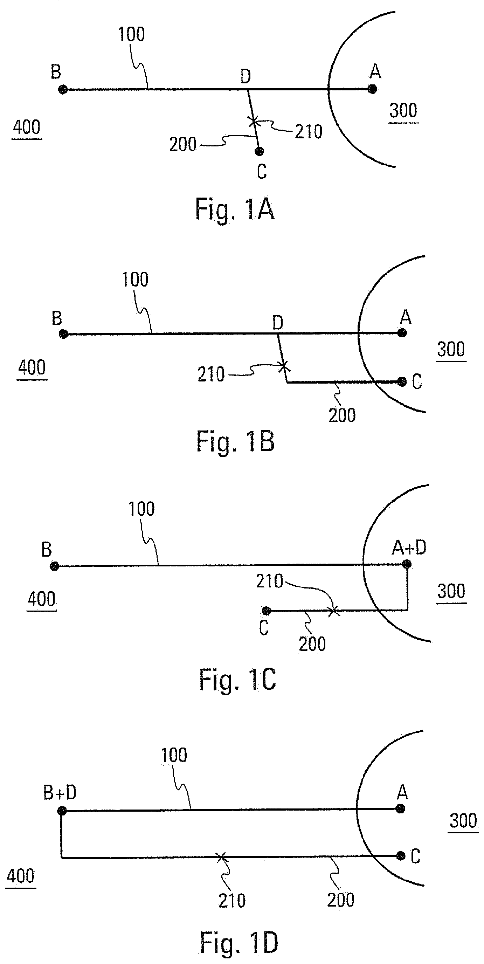

Dans le premier mode de réalisation schématiquement illustré en figure 1A, le second cordon 200 est relié par sa seconde extrémité D en un point intermédiaire entre la première extrémité A et la seconde extrémité B du premier cordon 100, et sa première extrémité C est fixée au boitier. Lorsque le capuchon est enlevé par rotation, ce mouvement provoque un déplacement de la première extrémité A du premier cordon 100, dans le sens horaire ou anti horaire, et une traction sur le premier cordon 100 ; cette traction est transmise au second cordon 200 et provoque sa rupture au point fragile 210. Le déplacement de la première extrémité A du premier cordon 100 et la traction exercée sur le premier cordon (et donc indirectement sur le second cordon) sont d'autant plus importants que cette première extrémité A est fixée en périphérie du capuchon 300.

Le deuxième mode de réalisation schématiquement illustré en figure 1B est semblable au premier mode de réalisation, mais dans ce cas la première extrémité C du second cordon est fixée au capuchon 300. La traction lors de l'ouverture du capuchon s'exerce donc directement à la fois sur le premier et le second cordon. Dans ce mode de réalisation, il est avantageux que la première extrémité A du premier cordon soit fixée proche du centre du capuchon 300 et la première extrémité C du second cordon 200 soit fixée en périphérie du capuchon 300 pour obtenir une traction plus forte sur le second cordon que sur le premier cordon.

Dans le troisième mode de réalisation schématique illustré en figure 1C, le second cordon 200 est relié par sa seconde extrémité D à la première extrémité A du premier cordon 100, donc également au capuchon 300, et sa première extrémité C est fixée au boitier 400. Comme pour le deuxième mode de réalisation, il est avantageux que la seconde extrémité D du second cordon 200 soit fixée en périphérie du capuchon 300 pour obtenir un grand déplacement et donc une traction forte sur le second cordon.

Dans le quatrième mode de réalisation schématique illustré en figure 1D, le second cordon 200 est relié par sa seconde extrémité D à la seconde extrémité B du premier cordon 100, donc également au boitier 400, et sa première extrémité C est fixée au capuchon 300. Comme pour le second mode de réalisation, il est avantageux que la première extrémité C du second cordon 200 soit fixée en périphérie du capuchon 300 pour obtenir un plus grand déplacement et donc une traction plus forte sur le second cordon.

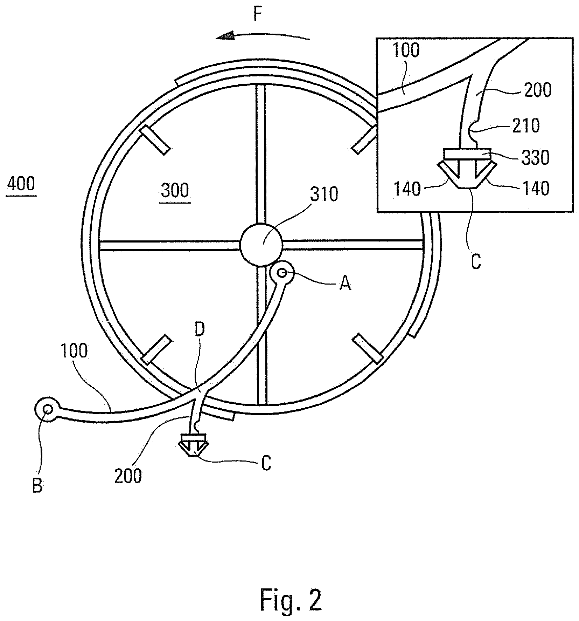

La figure 2 illustre un mode de réalisation du schéma de la figure 1A. Le capuchon 300 est de forme circulaire comportant une partie centrale 310 et se fixe sur le boitier 400 par rotation. L'assistant d'ouverture est du type en Y, il est formé :
- d'un premier cordon 100 dont la première extrémité A est fixée sur le capuchon et la seconde extrémité B est fixée sur le boitier ; tel que représenté sur la figure 2, la première extrémité A est fixée à proximité de la partie centrale 310 du capuchon, mais il pourrait être fixé à la périphérie du capuchon,
- d'un second cordon 200 comportant une première extrémité C fixée sur le boitier et d'une seconde extrémité D reliée au premier cordon 100, entre sa première extrémité A et sa seconde extrémité B, environ à mi-distance des première et seconde extrémité du premier cordon.

Les moyens de fixation des cordons sur le boitier ou le capuchon seront décrits plus loin.

Le second cordon 200 est plus court que le premier cordon 100, environ cinq fois plus court tel que représenté sur la figure 2.

Comme il est visible sur la vue agrandie, le second cordon 200 comporte une partie frangible 210 consistant en un rétrécissement important du diamètre de ce cordon, entre ses première et seconde extrémité C, D. De façon alternative (non représentée), cette partie frangible pourrait être située au niveau de sa première C ou de sa seconde extrémité D.

Le mouvement d'ouverture du capuchon 300 dans le sens de la flèche F provoque un déplacement de la première extrémité A du premier cordon et le met en tension ; par voie de conséquence, le second cordon 200 est également mis en tension et ultimement ce mouvement d'ouverture du capuchon provoque la rupture du second cordon à son point frangible 210. Cette mise en tension du premier 100 et du second cordon 200 sera d'autant plus importante que la première extrémité A du premier cordon 100 sera fixée proche de la périphérie du capuchon.

L'assistant d'ouverture est par exemple réalisé en matériau plastique, ledit matériau présentant une certaine élasticité donnant aux cordons la souplesse nécessaire à la manipulation du capuchon tout en autorisant la rupture du point frangible, sous tension.

Après ouverture, le capuchon 300 reste assujetti au boitier 400 par le premier cordon 100 et le second cordon 200, témoin de première ouverture, est rompu.

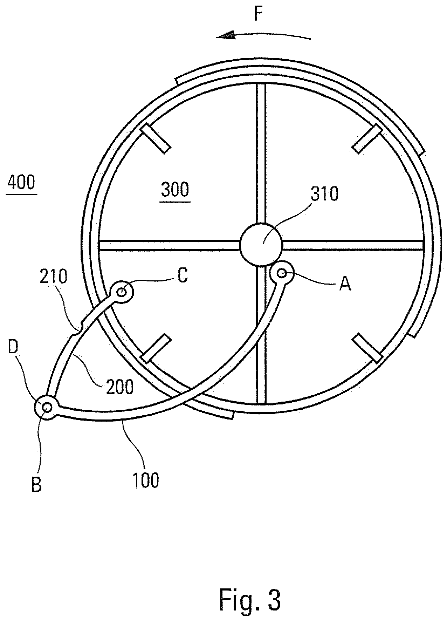

La figure 3 illustre un autre mode de réalisation de l'invention, correspondant au schéma de la figure 1D.

Le premier cordon 100 est identique à celui de la figure 2. Le second cordon 200 en revanche comporte une première extrémité C fixée en bordure du capuchon 300 et une seconde extrémité D qui est commune avec la seconde extrémité B du premier cordon 100, toutes les deux étant fixées au boitier 400. Comme précédemment, le second cordon 200 comporte une partie frangible 210 entre sa première C et sa seconde extrémité D.

Le mouvement d'ouverture du capuchon 300 dans le sens de la flèche F provoque un déplacement de la première extrémité C du second cordon 200 et le met en tension ; ultimement ce mouvement d'ouverture du capuchon provoque la rupture du second cordon à son point frangible 210. Cette mise en tension du second cordon 200 sera d'autant plus importante que la première extrémité C du second cordon 200 sera fixée proche de la périphérie du capuchon.

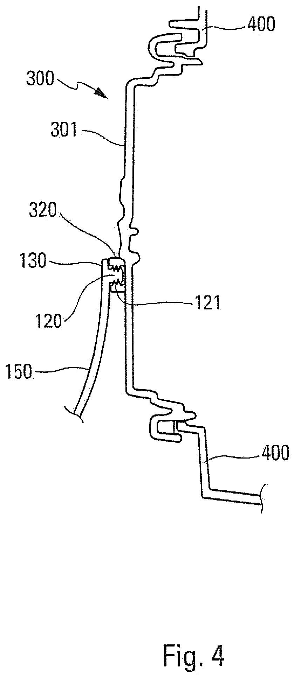

Comme illustré à la figure 4, la capuchon 300 est avantageusement fixé de façon étanche au boitier 400. Ce dernier accueille intérieurement différents éléments optiques, non représentés, tel qu'une ou plusieurs sources lumineuses, des réflecteurs et/ou guide de lumière, ou autres.

La figure 4 illustre également des moyens de fixation d'un cordon 150, pouvant être le premier 100 ou le second cordon 200, sur le capuchon 300. Ces moyens de fixation comportent d'une part une cavité 320 ménagée sur la face externe 301 du capuchon 300 et d'autre part une excroissance 120 à l'extrémité du cordon 150, excroissance qui s'étend de préférence, comme illustré en figure 4, orthogonalement à un axe longitudinal du cordon 150. A l'opposé de l'excroissance 120 par rapport à cet axe longitudinal s'étend un aplatissement 130 du cordon. De façon alternative, la cavité pourrait se trouver à l'extrémité du cordon et l'excroissance sur le capuchon.

Les formes de l'excroissance 120 et de la cavité 320 sont prévues pour coopérer en vue d'obtenir la fixation du cordon sur le capuchon par simple pression sur l'aplatissement 130, l'excroissance 120 pénétrant dans la cavité 320 avec friction. Pour favoriser le bon assemblage de l'excroissance dans la cavité, l'excroissance peut comporter sur sa surface une série de crans 121 par exemple annulaires, qui peuvent coopérer avec des crans homologues (non représentés) prévus sur la surface interne de la cavité 320.

Bien entendu, les mêmes moyens de fixation peuvent être utilisés pour la fixation du cordon sur le boitier.

La vue agrandie de la figure 2 illustre d'autres moyens de fixation du cordon. Dans ce mode de réalisation, l'extrémité C du second cordon 200 comporte deux barbules 140 formant harpon, et un arceau 330 s'étend à partir de la surface du boitier 400. La fixation s'obtient simplement en faisant pénétrer l'extrémité du cordon en forme de harpon dans l'arceau 330. Les barbules 140 s'écartent et rendent difficile le retour en arrière.

Bien entendu, les mêmes moyens de fixation peuvent être utilisés pour la fixation d'un cordon sur le capuchon.

La description qui précède n'est pas limitative. Ainsi, notamment, l'assistant d'ouverture pourra être prévu pour être fixé par vissage, les extrémités A, B et C du cordon comportant alors des passages de vis.

## Revendications

1. Dispositif pour fermer une ouverture de boitier optique (400) de véhicule, le dispositif comportant un capuchon (300), ledit capuchon (300) étant configuré pour fermer l'ouverture grâce à un mouvement réversible, le dispositif comportant en outre un moyen de liaison souple ou articulé fixé au capuchon (300) et prévu pour être fixé au boitier (400), de sorte que, après ouverture, ledit capuchon (300) reste assujetti au boitier (400) par ledit moyen de liaison et tel que le moyen de liaison comprend un premier cordon (100) souple comprenant deux extrémités, une première extrémité (A) comportant des moyens de fixation (120) au capuchon (300) et une seconde extrémité (B) comportant des moyens de fixation (140) au boitier (400) et **caractérisé en ce qu'**il comporte en outre un moyen de détection d'une première ouverture du capuchon (300) qui comprend un second cordon (200) souple comprenant deux extrémités, une première extrémité (C) comportant des moyens de fixation soit au capuchon (300) soit au boitier (400) et une seconde extrémité (D) reliée au premier cordon (100), et **en ce que** ledit second cordon (200) comprend une partie (210) qui change d'aspect de façon irréversible sous l'effet d'une traction, de sorte que le mouvement du capuchon (300) en vue de libérer l'ouverture provoque une traction sur ledit le second cordon (200) et donc son changement d'aspect.

2. Dispositif selon la revendication 1,
**caractérisé en ce que** la première extrémité (C) du second cordon (200) comporte des moyens de fixation au boitier (400) et la seconde extrémité (D) du second cordon (200) est reliée à un point du premier cordon (100) intermédiaire entre sa première (A) et sa seconde (B) extrémité.

3. Dispositif selon la revendication 1,
**caractérisé en ce que** la première extrémité (C) du second cordon (200) comporte des moyens de fixation au capuchon (300) et la seconde extrémité (D) du second cordon (200) est reliée à un point du premier cordon (100) intermédiaire entre sa première (A) et sa seconde (B) extrémité.

4. Dispositif selon la revendication 1,
**caractérisé en ce que** la première extrémité (C) du second cordon (200) comporte des moyens de fixation au capuchon (300) et la seconde extrémité (D) du second cordon (200) est reliée à la première extrémité (A) du premier cordon (100).

5. Dispositif selon la revendication 1,
**caractérisé en ce que** la première extrémité (C) du second cordon (200) comporte des moyens de fixation au boitier (400) et la seconde extrémité (D) du second cordon (200) est reliée à la seconde extrémité (B) du premier cordon (100).

6. Dispositif selon l'une des revendications 1 à 5,
**caractérisé en ce que** la partie (210) qui change d'aspect de façon irréversible est une partie du second cordon (200) frangible ou une partie apte à changer de couleur.

7. Dispositif selon la revendication précédente,
**caractérisé en ce que** la partie (210) du second cordon qui change d'aspect de façon irréversible est l'une des parties suivantes : la première extrémité (C), la seconde extrémité (D), une partie comprise entre la première extrémité et la seconde extrémité.

8. Dispositif selon l'une des revendications précédentes,
**caractérisé en ce que** le capuchon (300) comporte des moyens de fixation (320) aptes à coopérer avec les moyens de fixation (120) au capuchon du premier (100) cordon ou du premier (100) et du second (200) cordon pour obtenir la fixation d'une extrémité du ou des cordons sur le capuchon (300) par simple pression.

9. Dispositif selon la revendication précédente,
**caractérisé en ce que** les moyens de fixation (320) du capuchon (300) aptes à coopérer avec les moyens de fixation (120) au capuchon du premier (100) cordon ou du second (200) cordon sont situés à proximité de la périphérie du capuchon (300).

10. Boitier optique pour véhicule comportant une ouverture et un dispositif selon l'une des revendications précédentes.

11. Boitier selon la revendication 10 en ce qu'elle dépend de l'une quelconque des revendications 1, 2 ou 5,
**caractérisé en ce que** ledit boitier (400) comporte des moyens (330) aptes à coopérer avec la seconde extrémité (B) du premier cordon (100) ou la seconde extrémité (B) du premier cordon (100) et la première extrémité (C) du second cordon (200) pour obtenir la fixation d'une desdites extrémité du ou des cordons sur le boitier par simple pression.

## Patentansprüche

1. Vorrichtung zum Schließen einer Öffnung eines optischen Gehäuses (400) eines Fahrzeugs, wobei die Vorrichtung eine Abdeckkappe (300) aufweist, wobei die Abdeckkappe (300) dafür ausgelegt ist, die Öffnung mittels einer reversiblen Bewegung zu schließen, wobei die Vorrichtung außerdem ein flexibles oder gelenkiges Verbindungsmittel aufweist, das an der Abdeckkappe (300) befestigt ist und dafür vorgesehen ist, am Gehäuse (400) befestigt zu werden, derart, dass nach dem Öffnen die Abdeckkappe (300) durch dieses Verbindungsmittel fest am Gehäuse (400) angebracht bleibt, und derart, dass das Verbindungsmittel eine erste flexible Schnur (100) umfasst, die zwei Enden umfasst, ein erstes Ende (A), das Mittel zur Befestigung (120) an der Abdeckkappe (300) aufweist, und ein zweites Ende (B), das Mittel zur Befestigung (140) am Gehäuse (400) aufweist, und
**dadurch gekennzeichnet, dass** sie außerdem ein Mittel zur Erkennung eines erstmaligen Öffnens der Abdeckkappe (300) aufweist, welches eine zweite flexible Schnur (200) umfasst, die zwei Enden umfasst, ein erstes Ende (C), das Mittel zur Befestigung entweder an der Abdeckkappe (300) oder am Gehäuse (400) aufweist, und ein zweites Ende (D), das mit der ersten Schnur (100) verbunden ist, und dadurch, dass die zweite Schnur (200) einen Teil (210) umfasst, welcher unter der Einwirkung eines Zuges sein Aussehen irreversibel verändert, derart, dass die Bewegung der Abdeckkappe (300) zum Freilegen der Öffnung einen Zug an der zweiten Schnur (200) und somit die Änderung ihres Aussehens hervorruft.

2. Vorrichtung nach Anspruch 1,
**dadurch gekennzeichnet, dass** das erste Ende (C) der zweiten Schnur (200) Mittel zur Befestigung am Gehäuse (400) aufweist und das zweite Ende (D) der zweiten Schnur (200) mit einem Punkt der ersten Schnur (100) verbunden ist, der sich zwischen ihrem ersten (A) und ihrem zweiten (B) Ende befindet.

3. Vorrichtung nach Anspruch 1,
**dadurch gekennzeichnet, dass** das erste Ende (C) der zweiten Schnur (200) Mittel zur Befestigung an der Abdeckkappe (300) aufweist und das zweite Ende (D) der zweiten Schnur (200) mit einem Punkt der ersten Schnur (100) verbunden ist, der sich zwischen ihrem ersten (A) und ihrem zweiten (B) Ende befindet.

4. Vorrichtung nach Anspruch 1,
**dadurch gekennzeichnet, dass** das erste Ende (C) der zweiten Schnur (200) Mittel zur Befestigung an der Abdeckkappe (300) aufweist und das zweite Ende (D) der zweiten Schnur (200) mit dem ersten Ende (A) der ersten Schnur (100) verbunden ist.

5. Vorrichtung nach Anspruch 1,
**dadurch gekennzeichnet, dass** das erste Ende (C) der zweiten Schnur (200) Mittel zur Befestigung am Gehäuse (400) aufweist und das zweite Ende (D) der zweiten Schnur (200) mit dem zweiten Ende (B) der ersten Schnur (100) verbunden ist.

6. Vorrichtung nach einem der Ansprüche 1 bis 5,
**dadurch gekennzeichnet, dass** der Teil (210), welcher sein Aussehen irreversibel verändert, ein zerbrechbarer Teil der zweiten Schnur (200) ist, oder ein Teil, der in der Lage ist, seine Farbe zu ändern.

7. Vorrichtung nach dem vorhergehenden Anspruch,
**dadurch gekennzeichnet, dass** der Teil (210) der zweiten Schnur, welcher sein Aussehen irreversibel verändert, einer der folgenden Teile ist: das erste Ende (C), das zweite Ende (D), ein zwischen dem ersten Ende und dem zweiten Ende liegender Teil.

8. Vorrichtung nach einem der vorhergehenden Ansprüche,
**dadurch gekennzeichnet, dass** die Abdeckkappe (300) Mittel zur Befestigung (320) aufweist, die geeignet sind, mit den Mitteln der ersten (100) Schnur oder der ersten (100) und der zweiten (200) Schnur zur Befestigung (120) an der Abdeckkappe zusammenzuwirken, um die Befestigung eines Endes der Schnur oder der Schnuren an der Abdeckkappe (300) durch einfaches Drücken zu bewirken.

9. Vorrichtung nach dem vorhergehenden Anspruch,
**dadurch gekennzeichnet, dass** sich die Befestigungsmittel (320) der Abdeckkappe (300), die geeignet sind, mit den Mitteln der ersten (100) Schnur oder der zweiten (200) Schnur zur Befestigung (120) an der Abdeckkappe zusammenzuwirken, in der Nähe des Umfangs der Abdeckkappe (300) befinden.

10. Optisches Gehäuse für ein Fahrzeug, welches eine Öffnung und eine Vorrichtung nach einem der vorhergehenden Ansprüche aufweist.

11. Gehäuse nach Anspruch 10, wenn abhängig von einem der Ansprüche 1, 2 oder 5,
**dadurch gekennzeichnet, dass** das Gehäuse (400) Mittel (330) aufweist, die geeignet sind, mit dem zweiten Ende (B) der ersten Schnur (100) oder dem zweiten Ende (B) der ersten Schnur (100) und dem ersten Ende (C) der zweiten Schnur (200) zusammenzuwirken, um die Befestigung eines der Enden der Schnur oder der Schnuren am Gehäuse durch einfaches Drücken zu bewirken.

## Claims

1. Device for closing a vehicle optical housing (400) opening, the device including a cap (300), said cap (300) being configured to close the opening thanks to a reversible movement, the device further including flexible or articulated connecting means fixed to the cap (300) and designed to be fixed to the housing (400) so that, after opening, said cap (300) remains attached to the housing (400) by said connecting means and such that the connecting means include a first flexible cord (100) having two ends, a first end (A) including means (120) for fixing it to the cap (300) and a second end (B) including means (140) for fixing it to the housing (400) and **characterized in that** it further includes means for detecting the first opening of the cap (300) which include a second flexible cord (200) having two ends, a first end (C) including means for fixing it either to the cap (300) or to the housing (400) and a second end (D) connected to the first cord (100), and **in that** second cord (200) includes a portion (210) that changes appearance irreversibly in response to traction, so that the movement of the cap (300) in order to free the opening causes traction on said second cord (200) and therefore its change of appearance.

2. Device according to Claim 1,
**characterized in that** the first end (C) of the second cord (200) includes means for fixing it to the housing (400) and the second end (D) of the second cord (200) is connected at a point of the first cord (100) between its first end (A) and its second end (B).

3. Device according to Claim 1,
**characterized in that** the first end (C) of the second cord (200) includes means for fixing it to the cap (300) and the second end (D) of the second cord (200) is connected at a point of the first cord (100) between its first end (A) and its second end (B).

4. Device according to Claim 1,
**characterized in that** the first end (C) if the second cord (200) includes means for fixing it to the cap (300) and the second end (D) of the second cord (200) is connected to the first end (A) of the first cord (100).

5. Device according to Claim 1,
**characterized in that** the first end (C) if the second cord (200) includes means for fixing it to the housing (400) and the second end (D) of the second cord (200) is connected to the second end (B) of the first cord (100).

6. Device according to any one of Claims 1 to 5,
**characterized in that** the portion (210) that changes appearance irreversibly is a weak portion of the second cord (200) or a portion adapted to change color.

7. Device according to the preceding claim,
**characterized in that** the portion (210) of the second cord that changes appearance irreversibly is one of the following portions: the first end (C), the second end (D), a portion between the first end and the second end.

8. Device according to any one of the preceding claims,
**characterized in that** the cap (300) includes fixing means (320) adapted to cooperate with the means (120) for fixing the first cord (100) or the first cord (100) and the second cord (200) to the cap to effect a simple press-on fixing of one end of the cord or cords to the cap (300).

9. Device according to the preceding claim,
**characterized in that** the fixing means (320) of the cap (300) adapted to cooperate with the means (120) for fixing the first cord (100) or the second cord (200) to the cap are situated in the vicinity of the periphery of the cap (300).

10. Vehicle optical housing including an opening and a device according to any one of the preceding claims.

11. Housing according to Claim 10 when depending on any one of Claims 1, 2 or 5,
**characterized in that** said housing (400) includes means (330) adapted to cooperate with the second end (B) of the first cord (100) or the second end (B) of the first cord (100) and the first end (C) of the second cord (200) to effect a simple press-on fixing of one of said ends of the cord or cords to the housing.
